# EUROPÄISCHE PATENTSCHRIFT

(11) **EP 1 924 953 B1**
(45) Veröffentlichungstag und Bekanntmachung des Hinweises auf die Patenterteilung: **17.02.2010**
(21) Anmeldenummer: 06778409.0
(22) Anmeldetag: 30.08.2006
(51) Int. Cl.: G06K 13/08

(54) **ANORDNUNG MIT EINEM TACHOGRAPHEN**
ASSEMBLY COMPRISING A TACHOGRAPH
DISPOSITIF DOTE D'UN TACHYGRAPHE

(30) Priorität: 12.09.2005 DE 102005043335
(43) Veröffentlichungstag der Anmeldung: 28.05.2008
(73) Patentinhaber: Continental Automotive GmbH, 30165 Hannover (DE)
(72) Erfinder: KIMMICH, Franz, 78713 Schramberg (DE); LINDINGER, Andreas, 78658 Flözlingen (DE); NÄTHER, Horst, 78052 Villingen-Schwenningen (DE); SALM, Michael, 78112 Peterzell (DE)
(86) Internationale Anmeldenummer: PCT/EP2006/065829
(87) Internationale Veröffentlichungsnummer: WO 2007/031406

(56) Entgegenhaltungen:
- EP-A2- 0 917 110
- DE-A1- 19 533 515
- GB-A- 2 271 180

## Beschreibung

Die Erfindung betrifft eine Anordnung mit einem Tachographen und mit einem Datenspeicher, insbesondere einem Datenspeicher einer Datenkarte, wobei der Tachograph eine Schnittstelle aufweist, die dem Datenaustausch zwischen dem Tachographen und dem Datenspeicher dient, welcher Tachograph logische Funktionsmodule und mindestens einen Speicher aufweist.

Gemäß der EWG-Verordnung Nr. 3821/85 werden zukünftig die in Nutzfahrzeugen einzusetzenden Tachographen zur Aufzeichnung von Betriebsdaten nicht mehr, wie herkömmlich, analog eine papierne Diagrammscheibe beschriften, sondern die Geschwindigkeit über die Zeit digital in einem Datenspeicher speichern, nämlich einem Datenspeicher einer Datenkarte. Die EWG-Verordnung enthält umfassende Angaben dazu, wie die aufzuzeichnenden Daten, welche unter anderem den Anforderungen an gerichtliche Nachweise genügen müssen, abzuspeichern und gegen Manipulation abzusichern sind. Um den strengen Anforderungen der Verordnung zu genügen, sind sehr aufwendige kryptologische Sicherungsmechanismen und Authentisierungsverfahren zu implementieren. Besonderes Augenmerk ist hierbei der Datenübermittlung zwischen dem Datenspeicher der Datenkarte und dem Tachographen zu gewähren. Mit einer Datenkartenaufnahmevorrichtung beschäftigt sich bereits die deutsche Offenlegungsschrift DE 103 21 252 A1, welche eine manipulationssichere Aufnahme einer Karte in einen oben beschriebenen Tachographen beschreibt. Insbesondere die Datenübertragung zwischen dem Datenspeicher der Datenkarte und einem Speicher des Tachographen ist gegen Manipulationen abzusichern, da in diesen Bereich derartige Eingriffe erfahrungsgemäß zu befürchten sind. Aus diesem Grund sehen einschlägige Tachographen und Datenkarten jeweils eine Verschlüsselungseinheit als integralen Bestandteil vor, mittels welcher die Datenübertragung ausschließlich mittels eines Sitzungsschlüssels kryptologisch gesichert erfolgt. Diese Absicherung ist jedoch höchst aufwendig und fordert dem Benutzer viel Geduld ab, da sich Zugriffszeiten aufgrund der Absicherung der Datenübermittlung zwischen dem Tachographen und der Datenkarte nahezu unerträglich verlängern. Gemäß I-SO 7816 ist darüber hinaus der Schreib-Lese-Zugriff auf den Datenspeicher der Datenkarte auf eine Länge von 256 Byte beschränkt, so dass die Kommunikation über die an dieser Stelle genutzte serielle Verbindung gemäß EWG-Verordnung sehr langsam erfolgt.

In der DE 195 33 515 A1 ist eine Fahrtschreiberanordnung offenbart. Eine Fahrerkarte weist einen nicht-flüchtigen, überschreibbaren Speicher zur Speicherung von Kontrolldaten auf. Die Fahrtschreiberanordnung weist eine Einrichtung zum Einschreiben von Kontrolldaten in den Speicher der Fahrerkarte und zum Auslesen der in diesem gespeicherten Kontrolldaten auf. Ein temporärer Kontrolldatenspeicher und eine Steuereinrichtung sind vorgesehen. Die Steuereinrichtung steuert den Betrieb der Fahrtschreiberanordnung derart, dass bei Einsetzen der Fahrerkarte in den Fahrtschreiber die in der Fahrerkarte gespeicherten Kontrolldaten in den temporären Kontrolldatenspeicher geladen werden, während des Verbleibs der Fahrerkarte im Fahrtschreiber im temporären Kontrolldatenspeicher fortgeschrieben werden und die fortgeschriebenen Kontrolldaten bei Entnahme der Fahrerkarte in deren Kontrolldatenspeicher geladen werden. Kontrolldaten sind Sekundärdaten, die durch weitere Verarbeitung von den Fahrvorgang betreffenden Primärdaten gewonnen werden, insbesondere durch Aufsummierung über die Zeit. Die Sekundärdaten enthalten relevante Informationen zum Arbeitszeitregime.

In der GB 2 271 180 A ist ein elektronischer Tachograph offenbart mit einer Fahrzeugpositionserfassungseinheit. Der Tachograph hat eine zentrale Recheneinheit und Speicher, auf den die Recheneinheit direkten Zugriff hat. Die Recheneinheit nutzt ferner auch Informationen von einer entfernbaren Speicherkarte, die einem Fahrer oder Beifahrer zugeordnet ist. Die Speicherkarte sendet Informationen wie die Identität des Fahrers und Fahrerparameter. Die von der Speicherkarte empfangenen Informationen werden in dem Speicher des Tachographen aufgenommen. Der Speicher enthält ferner auch Ausgaben der Recheneinheit, die der Speicherkarte zugeführt werden.

Ausgehend von dem Stand der Technik hat es sich die Erfindung zur Aufgabe gemacht, die Zugriffszeiten im Umgang mit dem Tachographen ohne Sicherheitseinbußen, insbesondere bezüglich der Kommunikation zwischen den Tachographen und der Datenkarte, zu verkürzen.

Diese Aufgabe wird durch die Anordnung von Anspruch 1 gelösst.

Ein besonderer Vorteil der Erfindung liegt in der Einsparung vieler Datenübertragungszyklen zwischen dem Tachographen und dem Datenspeicher bzw. der Datenkarte. Da einschlägige Tachographen regelmäßig zwei Aufnahmevorrichtungen für zwei Datenkarten aufweisen, fällt die Einsparung dieses Aufwandes nahezu doppelt ins Gewicht. Da der Tachograph aufgrund der hochfrequent anstehenden regelmäßig interrupt-gesteuerten Aufzeichnungssignale aus dem Geschwindigkeitssensor hinsichtlich seiner Recheneinheit während des Betriebes eine verhältnismäßig hohe Auslastung der zentralen Recheneinheit aufweist, stellt die erfindungsgemäße Entlastung einen großartigen Vorteil dar. Ein regelmäßiger Abgleich kann vergleichsweise selten, beispielsweise in Abständen von jeweils 12 Stunden erfolgen. Bei einer Entnahmeanforderung der Datenkarte aus dem Tachographen bzw. bei einer Trennung des Datenspeichers von dem Tachographen ist ein Abgleich erforderlich zwischen dem virtuellen Abbild in dem Speicher und dem Datenspeicher der Datenkarte. Die Entnahmeanforderung erfolgt jedoch regelmäßig im Stillstand des Nutzfahrzeuges, so dass das hochfrequente Geschwindigkeitssignal nicht ansteht und die zentrale Recheneinheit ohnehin entlastet ist. Auf diese Weise lassen sich trotz des erforderlichen Abgleichs bei der Trennung des Datenspeichers von dem Tachographen akzeptable Zugriffszeiten realisieren.

Alternativ oder zusätzlich zu einem regelmäßigen Schreib- und Lesezugriff in periodischen zeitlichen Abständen des Tachographen auf den Datenspeicher, insbesondere der Datenkarte, vorzugsweise alle 12 Stunden, kann ein derartiger Datenaustausch auch dann erfolgen, wenn ein bestimmtes Datenvolumen zwischen dem virtuellen Abbild und dem Datenspeicher aufgrund von Veränderungen des Abbildes anzugleichen ist. Ein Minimalstandard, der dennoch einschlägigen Sicherheitsbestimmungen genügen würde, liegt in der Möglichkeit, vor der Trennung des Datenspeichers von dem Tachographen einen Abgleich des virtuellen Abbilds mit dem Datenspeicher vorzunehmen. Mit Vorteil ist der Tachographen erart ausgebildet, dass die Datenkarte vollständig von der Datenkarteaufnahmevorrichtung des Tachographen aufgenommen wird und nicht direkt aus dem Gerät entnommen werden kann, sondern der Benutzer teilt dem Gerät eine Entnahmeanforderung mittels Knopfdrucks mit, woraufhin nach einem entsprechenden Datenaustausch die Datenkarte aus dem Tachographen ausgegeben wird. Obwohl regelmäßig bei einem modernen Tachographen schon sämtliche mechanisch möglichen Sicherheitsmechanismen vorgesehen sind, die die Datenübertragung zwischen dem Datenspeicher und dem Tachographen gegen Manipulation absichern, erfolgt die Datenübertragung zwischen dem Datenspeicher und dem Tachographenregelmäßig verschlüsselt. Auf dem Datenspeicher werden insbesondere die Geschwindigkeitsdaten des Nutzfahrzeuges und die Aktivitäten des Fahrzeugführers aufgezeichnet. Hierzu ist der verfügbare Speicherplatz der Datenkarte verhältnismäßig begrenzt, so dass ein Teil des Datenspeichers zweckmäßig als Ringspeicher ausgebildet ist und auf diese Weise stets die ältesten Aufzeichnungen mit den neusten überschrieben werden. Dies berücksichtigend, kann das Abbild des Ringspeichers vorteilhaft als linearer Speicher ausgebildet sein, mit einer Anfangsadresse für den ersten Eintrag und einer Endadresse für den letzten Eintrag, wobei eine festgelegte Adressierungsreihenfolge nach dem Aufruf der Endadresse nachfolgend den Aufruf der Anfangsadresse vorsieht. Hierbei ist es zweckmäßig, wenn das virtuelle Abbild des Datenspeichers zwar die Architektur des Datenspeichers abbildet, die in dem Ringspeicher gespeicherten Daten jedoch nur teilweise in dem Abbild abgebildet werden. Eine vollständige Übertragung des gesamten Inhalts des Datenspeichers beispielsweise beim Einstecken der Karte in den Tachographen, dauert unter Umständen unakzeptabel lange, wobei den alten Daten hierbei nicht unbedingt ein praktischer Nutzen zukommt. Daher ist es sinnvoll, wenn das virtuelle Abbild nach anfänglicher Erzeugung zunächst nur die Daten des letzten Eintragungsblocks des Ringspeichers des Datenspeichers abbildet.

Um einen Zuvielaufwand bei der Datenübertragung zu vermeiden, ist es sinnvoll, wenn dem virtuellen Abbild zumindest ein Änderungszeiger zugeordnet ist, nämlich in dem Datenspeicher des Tachographen die Stelle des virtuellen Abbildes des Ringspeichers gespeichert ist, an der die erste Änderung seit dem letzten Abgleich erfolgte.

Eine vorteilhafte Weiterbildung der Erfindung sieht vor, dass bei einem von der Endadresse zu der Anfangsadresse des Abbildes sich erstreckenden Schreibvorgang in dem virtuellen Abbild zumindest ein Änderungszeiger die Stelle vor der Endadresse markiert, an der die Änderungen nach dem letzten Abgleich begonnen haben und mindestens ein zweiter Änderungszeiger die Stelle markiert, an der der Schreibvorgang nach der Endadresse fortgesetzt wurde. Eine derartige Markierung über den Adressensprung des Ringspeichers hinweg stellt einen konfliktfreien Abgleich zwischen dem Datenspeicher und dem Speicher des Tachographen sicher. Die Zuverlässigkeit dieses Vorgangs lässt sich zusätzlich erhöhen, wenn die Änderungszeiger zusätzlich noch Informationen über die Anzahl der Bytes umfassen, die seit dem letzten Abgleich in dem Ringspeicher beginnend ab der angezeigten Stelle gespeichert wurden.

Viel Zeit kann verloren gehen, wenn verschiedene logische Funktionsmodule Schreib- oder Lesezugriff auf das Abbild ausführen und hierzu feste Zeitfenster vorgegeben sind. Derartige Vorgänge können zwar auch interrupt-gesteuert geführt werden, dies destabilisiert jedoch Vorgänge der zentralen Recheneinheit. Besonders zweckmäßig ist daher eine Koordination der logischen Funktionsmodule, die Schreib- oder Lesezugriffe auf das Abbild ausführen mittels einer zentralen Statusvariablen. Hierbei ist es sinnvoll, wenn die Funktionsmodule die Statusvariable regelmäßig abfragen und bei einem bestimmten Wert der Statusvariablen, der dem jeweils abfragenden Funktionsmodul zugeordnet ist, anstehende Schreibvorgänge einleiten. Gleichsam als Fertigmeldung kann vorgesehen sein, dass die logischen Funktionsmodule, welche die Schreibzugriffe auf den Speicherbereich des Abbildes ausführen nach Abschluss der anstehenden Aufgaben die Statusvariable ändern. Eine konfliktfreie Koordination dieser Zugriffe auf den Datenspeicher ist insbesondere dann gewährleistet, wenn die logischen Funktionsmodule ein Abbildstatusmodul umfassen, welches regelmäßig die Statusvariable abruft und dieser einen neuen Wert zuweist, wenn zuvor ein anderes Funktionsmodul den Wert geändert hat, welcher neue Wert einem bestimmten Funktionsmodul zur Zuteilung des Schreibzugriffs zugeordnet ist.

Besondere Laufzeitvorteile entfaltet die Erfindung, wenn die Funktionsmodule eine Verschlüsselungseinheit umfassen, mittels derer Elemente der Datenübertragung zwischen dem Tachographen und dem Datenspeicher verschlüsselt werden. Hierzu kann der Datenspeicher ebenfalls eine Verschlüsselungseinheit aufweisen.

Aufgrund der besonderen erfindungsgemäßen Markierung der abzugleichenden Daten des virtuellen Abbilds entfaltet die Erfindung weitere Vorteile im Falle eines Ausfalls der elektrischen Spannungsversorgung. Die Anordnung kann hierbei vorsehen, dass nach Auswahl der Spannungsversorgung vor jedem anderen Zugriff auf den Datenspeicher zunächst Identifizierungsdaten des Datenspeichers mit denen des virtuellen Abbilds des Datenspeichers verglichen werden. Diese Gestaltung ist daher sinnvoll, weil bei einem Fortfall der Versorgungsspannung ein Manipulationsversuch möglicherweise einen Austausch des Datenspeichers vorsehen kann. Der Vorteil der Erfindung liegt an dieser Stelle vor allem darin, dass bereits das virtuelle Abbild des Datenspeichers einschließlich der Identifizierungsdaten vorliegt und somit lediglich ein Vergleich erfolgen muss. Tritt ein Spannungsausfall direkt vor Eintritt in eine Datenübertragung auf, oder direkt nach Abschluss einer derartigen Datenübertragung, so muss lediglich der Datenspeicher nach Wiederkehr der Spannung authentisiert werden. Ein Spannungsausfall während eines Lesevorgangs von dem Datenspeicher hat nach einer vorteilhaften Weiterbildung der Erfindung zweckmäßig den Effekt, dass die Funktionsmodule in dem aktuellen Zustand verharren bis zur Wiederkehr der Spannung und anschließend aus diesem Zustand den Lesevorgang fortsetzen, nachdem zunächst Identifizierungsdaten vorzugsweise wechselseitig miteinander verglichen wurden.

Sofern es ist nicht ausdrücklich erwähnt wurde, betreffen die funktionellen Merkmale stets eine Ausbildung der Anordnung demgemäß, dass die beanspruchte Funktion mittels der erfindungsgemäßen Anordnung ausführbar ist. Neben der erfindungsgemäßen Anordnung ist auch ein erfindungsgemäßes Verfahren zum Betrieb einer Anordnung nach mindestens einem oder einer Kombination der Ansprüche Gegenstand der Erfindung. Hierbei sind insbesondere die beanspruchten Merkmale der Erfindung auch bei Fehlen eines ausdrücklichen entsprechenden Rückbezuges Gegenstand eines erfindungsgemäßen Verfahrens.

Im Folgenden ist die Erfindung anhand eines speziellen Ausführungsbeispiels ohne Einschränkungswirkung zur Verdeutlichung näher beschrieben. Es zeigen:
- Figur 1: eine schematische Darstellung einer erfindungsgemäßen Anordnung,
- Figur 2: eine schematische Darstellung des Ablaufes der grundlegenden Prozesse beim Betrieb einer erfindungsgemäßen Anordnung,
- Figur 3: eine schematische Darstellung der Umsetzung einer Ringspeichers einer virtuellen Abbildung nach der Erfindung,
- Figur 4: eine schematische Darstellung des Zusammenwirkens logischer Funktionsmodule mit dem Speicher koordiniert mittels einer erfindungsgemäßen Statusvariablen.

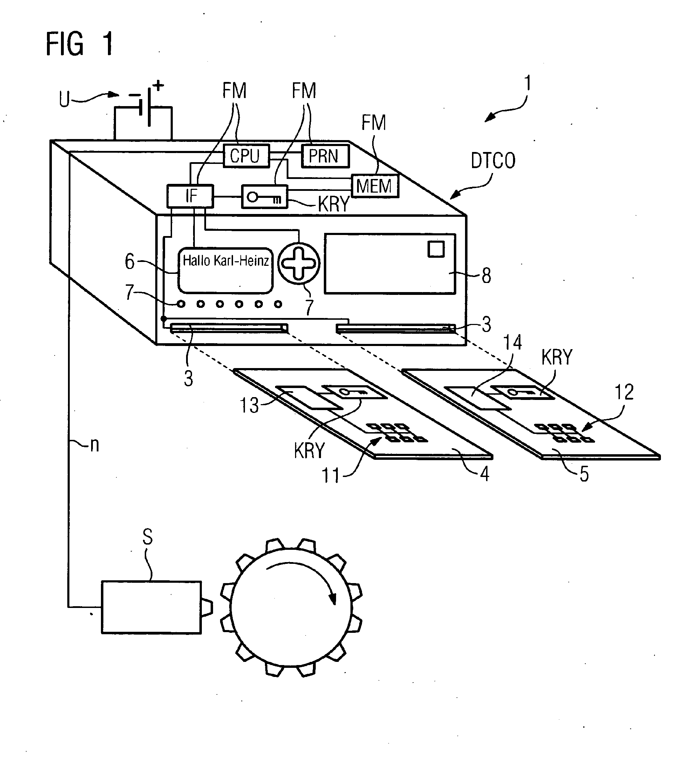

Figur 1 zeigt eine erfindungsgemäße Anordnung 1 mit einem Tachographen DTCO, der mit einem ein Geschwindigkeitssignal n gebenden Sensor S in Verbindung steht und Datenkartenaufnahmen 3 aufweist, in welche Datenkarten 4, 5 eingebbar sind. Der Tachographen DTCO weist verschiedene logische Funktionsmodule FM auf, welche unter anderem eine zentrale Verarbeitungseinheit CPU, ein Schnittstellenverwaltungsmodul IF, ein Verschlüsselungsmodul KRY einen Speicher MEM und einen Druckercontroller PRN umfassen. Daneben weist der Tachographen DTCO noch eine Anzeigeeinheit 6, verschiedene Bedienelemente 7 eine Spannungsversorgung U und ein Druckmodul 8 auf. Die einzelnen Funktionsmodule FM stehen untereinander in signalübertragender Verbindung. Die Datenkarten 4, 5 weisen jeweils eine Schnittstelle 11, 12 auf, die mit einer nicht näher dargestellten Schnittstelle des Tachographen DTCO in datenübertragende Verbindung gehen kann. Mittels dieser Schnittstelle 11, 12 können die Datenkarten 4, 5 jeweils in einem Datenspeicher 13, 14 der Datenkarte 4, 5 abgelegte Informationen an den Tachographen 2 übermitteln, wobei Verschlüsselungsmodule KRY sowohl der Datenkarten 4, 5 als auch des Tachographen DTCO für eine kryptologisch gesicherte Übermittlung sorgen.

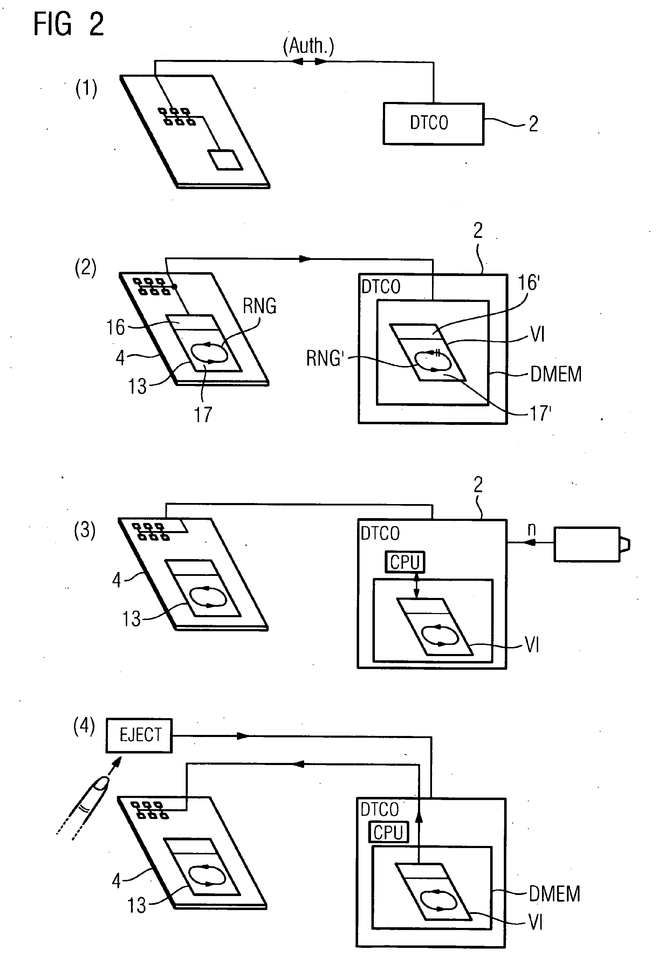

Figur 2 zeigt den schematischen Ablauf der Erzeugung eines virtuellen Abbilds VI in einem Speicher DMEM des Tachographen DTCO basierend auf dem Datenspeicher 13 der Datenkarte 4. In der Figur 2 sind die Bezugszeichen der Elemente, die denjenigen des tatsächlichen Datenspeichers 13 entsprechen, mit einem kleinen Strich versehen. In einem ersten Schritt (1) treten der Tachographen DTCO und der Datenspeicher 13 der Datenkarte 4 miteinander in signalübertragende Verbindung und automatisch wird ein Authentisierungsvorgang (Auth.) zwischen diesen beiden Teilnehmern der Kommunikation eingeleitet. Nach erfolgreicher Authentisierung (Auth.) erstellt der Tachographen DTCO ein virtuelles Abbild VI in seinem Speicher DMEM von dem Datenspeicher 13 der Datenkarte 4. Hierbei wird der Gesamtaufbau des Datenspeichers in dem virtuellen Abbild VI abgebildet. Dies umfasst einen ersten Speicherteil 16, 16' üblicher Beschaffenheit und einen zweiten Speicherteil 17, 17', der als Ringspeicher RNG, RNG' ausgebildet ist. Nach Erzeugung des virtuellen Abbilds VI in dem Speicher des DMEM des Tachographen DTCO erfolgt in Schritt (3) im Wesentlichen der Erfassungsbetrieb des Tachographen 2, währenddessen das Geschwindigkeitssignal n in dem virtuellen Abbild VI aufgezeichnet wird. In nicht dargestellter Weise erfolgt alle 12 Stunden ein Abgleich des virtuellen Abbilds VI mit dem Datenspeicher 13 der Datenkarte 4. Bei diesem Abgleich werden im Wesentlichen die Einträge des Ringspeichers RNG miteinander abgeglichen. Kommt es, wie in Schritt (4) dargestellt, zu einer Entnahmeanforderung (EJECT) an dem digitalen Tachographen DTCO wird zunächst das virtuelle Abbild VI mit dem Datenspeicher 13 abgeglichen und anschließend die Datenkarte 4 ausgegeben.

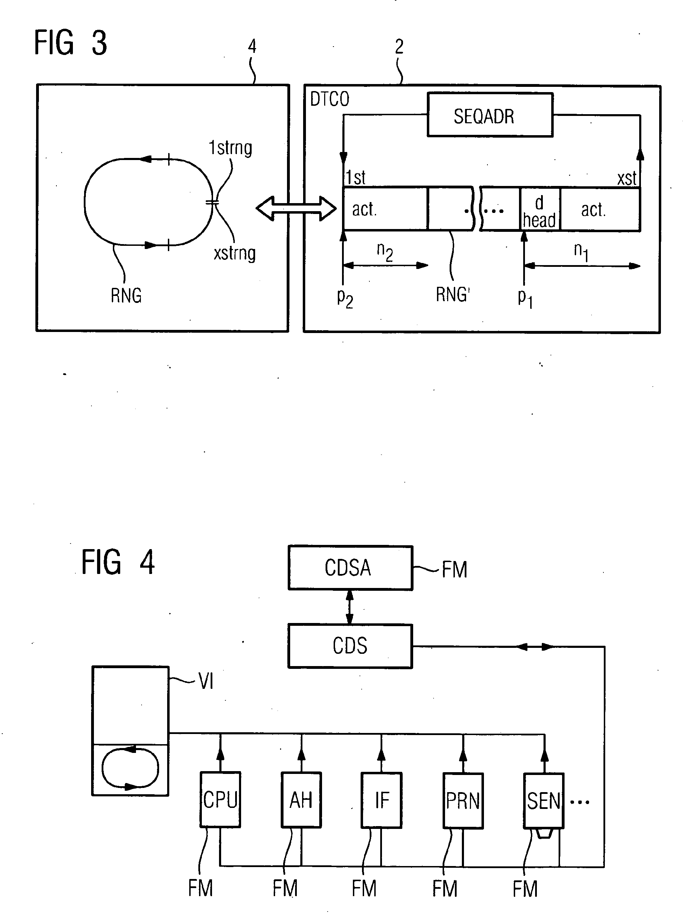

In Figur 3 ist der Abgleich des virtuellen Abbilds VI, insbesondere des Ringspeichers RNG' mit dem Datenspeicher 13 bzw. des dortigen Ringspeichers RNG dargestellt. Entscheidend ist hierbei der Aufbau des Ringspeichers RNG des virtuellen Abbilds VI, welcher eine eigentlich lineare Struktur aufweist, wobei eine vorgegebene Adressierungsreihenfolge SEQADR auf eine Adressierung des letzten Speicherplatzes Xst dieses linearen Speichers die Adressierung eines ersten Speicherplatzes 1st folgen lässt. In dem Ringspeicher RNG der Datenkarte entspricht dies dem Speicherplätzen 1strng bzw. Xstrng.

Der Ringspeicher RNG' des Tachographen DTCO bzw. des Speichers DMEM weist Änderungszeiger p1, p2 auf, mittels derer die nach dem letzten Abgleich des virtuellen Abbilds mit dem Datenspeicher 13 entstandenen Änderungen markiert werden. Hierbei wird der Beginn des geänderten Eintrages mittels des mit p1 bezeichneten Zeigers festgehalten, wobei die in Figur 3 dargestellte Situation einen Eintrag zeigt, der mit d head und act. bezeichnet ist, der sich über die Endadresse Xst und Anfangsadresse 1st des virtuellen Abbildes VI erstreckt und neben dem ersten Änderungszeiger p1 noch ein zweiter Änderungszeiger p2 die Stelle markiert, an der der Schreibvorgang nach der Endadresse Xst fortgesetzt wurde, nämlich an der Anfangsadresse 1st. Der Eintrag besteht aus einem Header und den abgespeicherten Betätigungsarten des Fahrzeugführers act.. Den Änderungszeigern p1, p2 sind jeweils noch Informationen in n1, n2 über die Anzahl der Bytes beigefügt, die seit dem letzten Abgleich in dem Ringspeicher beginnend ab der angezeigten Stelle gespeichert sind. Demgemäß sind jeweils der Anfangspunkt der abzugleichenden Daten und die Länge mittels des Änderungszeigers angezeigt.

In Figur 4 ist die Koordinierung der Funktionsmodule FM beim Schreiben auf das virtuelle Abbild VI mittels eines Kartendatenstatusses CDS schematisch dargestellt. Verschiedene Funktionsmodule FM, beispielsweise die zentrale Recheneinheit CPU, ein aktiver Hardwareschutz AH, eine Schnittstellenverwaltung IF, ein Druckmodul PRN oder ein Sensor Sen schreiben weitestgehend autonom in den Speicher DMEM bzw. dessen virtuelles Abbild VI. Damit es hierbei nicht zu Konflikten kommt, ist eine zentrale Statusvariable CDS vorgesehen, die wechselseitig von den Funktionsmodulen FM und einem Abbildstatusmodul CDSA mit einem Wert belegt wird. Das Abbildstatusmodul CDSA belegt hierbei die Statusvariable CDS jeweils mit einem Wert, der einem Funktionsmodul FM zugeordnet ist. Die Funktionsmodule FM fragen den Wert der Statusvariablen CDS regelmäßig ab und leiten anliegende Schreibvorgänge auf das Abbild VI ein, wenn der Wert demjenigen entspricht, der dem entsprechenden Funktionsmodul zugeordnet ist. Nach Abschluss der Schreiboperation belegt das Funktionsmodul die Statusvariable CDS mit einem neuen Wert, der dem Abbildsstatusmodul den Abschluss der Schreiboperation anzeigt, so dass der Statusvariablen CDS ein neuer Wert zugewiesen werden kann.

## Patentansprüche

1. Anordnung (1) mit einem Tachographen (DTCO) und mit einem Datenspeicher (13, 14), insbesondere einem Datenspeicher (13, 14) einer Datenkarte (4, 5), wobei der Tachograph (DTCO) eine Schnittstelle aufweist, die dem Datenaustausch zwischen dem Tachographen (DTCO) und dem Datenspeicher (13, 14) dient, welcher Tachograph (DTCO) logische Funktionsmodule (FM) und mindestens einen Speicher (DMEM) aufweist und die logischen Funktionsmodule (FM) derart ausgebildet sind, dass zu Beginn der Datenübertragung zunächst ein virtuelles Abbilds (VI) des Datenspeichers (13, 14) in dem Speicher (DMEM) des Tachographen (DTCO) angelegt wird, folgende Schreib- und Lesezugriffe der logischen Funktionsmodule (FM) zunächst auf das virtuelle Abbilds (VI) in dem Speicher (DMEM) erfolgen und regelmäßig ein Schreibvorgang unter Zugriff auf den Datenspeicher (13, 14) der Datenkarte (4, 5) erfolgt, während dessen die Unterschiede zwischen dem virtuellen Abbilds (VI) und dem Datenspeicher (13, 14) abgeglichen werden, **dadurch gekennzeichnet, dass** die logische Funktionsmodule derart ausgebildet sind, dass der regelmäßige Schreib- und Lesezugriff in periodischen zeitlichen Abständen erfolgt und/oder wenn ein bestimmtes Datenvolumen zwischen dem virtuellen Abbilds (VI) und dem Datenspeicher (13, 14) aufgrund von Veränderungen des Abbildes abzugleichen ist.

2. Anordnung (1) nach Anspruch 1, **dadurch gekennzeichnet, dass** der regelmäßige Schreib- und Lesezugriff alle 12 Stunden erfolgt.

3. Anordnung (1) nach Anspruch 1, **dadurch gekennzeichnet, dass** vor der Trennung des Datenspeichers (13, 14) von dem Tachographen (DTCO) ein Abgleich des virtuellen Abbilds (VI) mit dem Datenspeicher (13, 14) erfolgt.

4. Anordnung (1) nach Anspruch 1, **dadurch gekennzeichnet, dass** die Datenübertragung zwischen dem Datenspeicher (13, 14) und dem Tachographen (DTCO) verschlüsselt erfolgt.

5. Anordnung (1) nach Anspruch 1, **dadurch gekennzeichnet, dass** der Datenspeicher (13, 14) einen Ringspeicher (RNG) aufweist.

6. Anordnung (1) nach Anspruch 5, **dadurch gekennzeichnet, dass** das Abbilds (VI) des Ringspeichers (RNG') als linearer Speicher (DMEM) ausgebildet ist, mit einer Anfangsadresse (1st) für den ersten Eintrag und einer Endadresse (xst) für den letzten Eintrag, wobei eine festgelegte Adressierungsreihenfolge (ADRSEQ) nach dem Aufruf der Endadresse (xst) nachfolgend den Aufruf der Anfangsadresse (1st) vorsieht.

7. Anordnung (1) nach Anspruch 1, **dadurch gekennzeichnet, dass** das virtuelle Abbilds (VI) des Datenspeichers (13, 14) die Architektur des Datenspeichers (13, 14) abbildet und die in dem Ringspeicher (RNG) gespeicherten Daten nur teilweise in dem Abbilds (VI) abgebildet werden.

8. Anordnung (1) nach einem der Ansprüche 5 - 7, **dadurch gekennzeichnet, dass** das virtuelle Abbilds (VI) nach anfänglicher Erzeugung zunächst nur die Daten des letzten Eintragungsblocks des Ringspeichers (RNG) des Datenspeichers (13, 14) abbildet.

9. Anordnung (1) nach einem der Ansprüche 5 - 7, **dadurch gekennzeichnet, dass** dem virtuellen Abbilds (VI) mindestens ein Änderungszeiger (p1, p2) zugeordnet ist, nämlich in dem Datenspeicher (13, 14) des Tachographen (DTCO) die Stelle des virtuellen Abbilds (VI) des Ringspeichers (RNG) gespeichert ist, an der die erste Änderung seit dem letzten Abgleich erfolgte.

10. Anordnung (1) nach Anspruch 9, **dadurch gekennzeichnet, dass** bei einem von der Endadresse (xst) zu der Anfangsadresse (1st) des Abbilds(VI) sich erstreckenden Schreibvorgang in dem virtuellen Abbilds (VI) mindestens ein erster Änderungszeiger (p1) die Stelle vor der Endadresse (xst) markiert, an der die Änderungen nach dem letzten Abgleich begonnen haben und mindestens ein zweiter Änderungszeiger (p2) die Stelle markiert, an der der Schreibvorgang nach der Endadresse (xst) fortgesetzt wurde.

11. Anordnung (1) nach Anspruch 9 oder 10, **dadurch gekennzeichnet, dass** die Änderungszeiger (p1) zusätzlich noch Informationen über die Anzahl (n1, n2) der Bytes umfassen, die seit dem letzten Abgleich in dem Ringspeicher (RNG') beginnend ab der angezeigten Stelle gespeichert wurden.

12. Anordnung (1) nach einem der vorhergehenden Ansprüche, **dadurch gekennzeichnet, dass** einige der logischen Funktionsmodule (FM) Schreib- oder Lesezugriffe auf das Abbilds (VI) ausführen und hierbei mittels einer zentralen Statusvariablen (CDS) koordiniert sind.

13. Anordnung (1) nach einem der vorhergehenden Ansprüche, **dadurch gekennzeichnet, dass** einige der logischen Funktionsmodule (FM) Schreibzugriffe auf Speicherbereiche des Abbildes (VI) ausführen und hierbei mittels einer zentralen Statusvariablen koordiniert sind, wobei die Funktionsmodule (FM) die Statusvariable (CDS) regelmäßig abfragen und bei einem bestimmten Wert der Statusvariablen (CDS), der dem jeweils abfragenden Funktionsmodul (FM) zugeordnet ist, anstehende Schreibvorgänge einleiten.

14. Anordnung (1) nach dem vorhergehenden Anspruch, **dadurch gekennzeichnet, dass** die logischen Funktionsmodule (FM), welche die Schreibzugriffe auf einen Speicherbereich des Abbildes (VI) ausführen nach Abschluss der anstehenden Schreibzugriffe die Statusvariable (CDS) ändern.

15. Anordnung (1) nach dem vorhergehenden Anspruch, **dadurch gekennzeichnet, dass** die logischen Funktionsmodule (FM) ein Abbildstatusmodul (CDSA) umfassen, welches regelmäßig die Statusvariable (CDS) abruft und dieser einen neuen Wert zuweist, wenn zuvor ein anderes Funktionsmodul (FM) den Wert geändert hat, welcher neue Wert einem bestimmten Funktionsmodul (FM) zur Zuteilung des Schreibzugriffs zugeordnet ist.

16. Anordnung (1) nach einem der vorhergehenden Ansprüche, **dadurch gekennzeichnet, dass** die Anordnung (1) eine elektrische Spannungsversorgung (U) umfasst und derart ausgebildet ist, dass nach deren Ausfall vor jedem anderen Zugriff auf den Datenspeicher (13, 14) zunächst Identifizierungsdaten des Datenspeichers (13, 14) mit denen des virtuellen Abbilds des Datenspeichers (13, 14) verglichen werden.

17. Anordnung (1) nach dem vorhergehenden Anspruch, **dadurch gekennzeichnet, dass** sie derart ausgebildet ist, dass sie bei einem Spannungsausfall direkt vor Eintritt in einen Lese- oder Schreibvorgang von dem bzw. auf den Datenspeicher (13, 14), nach Wiederkehr der Spannung zunächst Identifizierungsdaten des Datenspeichers (13, 14) mit denen des virtuellen Abbilds des Datenspeichers (13, 14) verglichen werden und anschließend der Lese- bzw. Schreibvorgang gestartet wird.

18. Anordnung (1) nach dem vorhergehenden Anspruch, **dadurch gekennzeichnet, dass** bei einem Spannungsausfall während eines Lesevorgang von dem Datenspeicher (13, 14), die Funktionsmodule (FM) in dem aktuellen Zustand verharren bis zur Wiederkehr der Spannung und anschließend aus diesem Zustand den Lesevorgang fortsetzen nachdem zunächst Identifizierungsdaten des Datenspeichers (13, 14) mit denen des virtuellen Abbilds (VI) des Datenspeichers (13, 14) verglichen worden sind.

19. Anordnung (1) nach einem der vorhergehenden Ansprüche, **dadurch gekennzeichnet, dass** bei einem Spannungsausfall direkt nach Abschluss eines Lese- oder Schreibvorgangs von dem bzw. auf den Datenspeicher (13, 14), nach Wiederkehr der Spannung zunächst Identifizierungsdaten des Datenspeichers (13, 14) mit denen des virtuellen Abbilds des Datenspeichers (13, 14) verglichen werden.

20. Verfahren zum Betrieb einer Anordnung (1) nach einem der vorhergehenden Ansprüche.

## Claims

1. Arrangement (1) having a tachograph (DTCO) and having a data store (13, 14), particularly a data store (13, 14) on a data card (4, 5), where the tachograph (DTCO) has an interface which is used for data interchange between the tachograph (DTCO) and the data store (13, 14), which tachograph (DTCO) has logic functional modules (FM) and at least one memory (DMEM) and the logic functional modules (FM) are in a form such that at the start of the data transmission a virtual map (VI) of the data store (13, 14) is first of all created in the memory (DMEM) of the tachograph (DTCO), subsequent read and write access operations by the logic functional modules (FM) are first of all effected on the virtual map (VI) in the memory (DMEM), and a write operation is regularly effected by accessing the data store (13, 14) on the data card (4, 5), during which the differences between the virtual map (VI) and the data store (13, 14) are aligned, **characterized in that** the logic functional modules are designed in such a way that the regular read and write access is effected at periodic intervals of time and/or when a particular volume of data needs to be aligned between the virtual map (VI) and the data store (13, 14) on the basis of changes in the map.

2. Arrangement (1) according to Claim 1, **characterized in that** the regular read and write access is effected every 12 hours.

3. Arrangement (1) according to Claim 1, **characterized in that** before the data store (13, 14) is separated from the tachograph (DTCO) the virtual map (VI) is aligned with the data store (13, 14).

4. Arrangement (1) according to Claim 1, **characterized in that** the data transmission between the data store (13, 14) and the tachograph (DTCO) takes place in encrypted form.

5. Arrangement (1) according to Claim 1, **characterized in that** the data store (13, 14) has a ring memory (RNG).

6. Arrangement (1) according to Claim 5, **characterized in that** the map (VI) of the ring memory (RNG') is in the form of a linear memory (DMEM), with a start address (1st) for the first entry and an end address (xst) for the last entry, where a stipulated addressing order (ADRSEQ) provides for the call to the end address (xst) to be followed by the call to the start address (1st).

7. Arrangement (1) according to Claim 1, **characterized in that** the virtual map (VI) of the data store (13, 14) maps the architecture of the data store (13, 14), and the data stored in the ring memory (RNG) are mapped in the map (VI) only in part.

8. Arrangement (1) according to one of Claims 5-7, **characterized in that** the virtual map (VI), following initial production, first of all maps only the data from the last entry block in the ring memory (RNG) of the data store (13, 14).

9. Arrangement (1) according to one of Claims 5-7, **characterized in that** the virtual map (VI) has at least one associated change pointer (p1, p2), namely the data store (13, 14) of the tachograph (DTCO) stores the location of the virtual map (VI) of the ring memory (RNG) at which the first change since the last alignment was made.

10. Arrangement (1) according to Claim 9, **characterized in that** a write operation in the virtual map (VI) extending from the end address (xst) to the start address (1st) of the map (VI) involves at least one first change pointer (p1) marking the location in front of the end address (xst) at which the changes after the last alignment have started and at least one second change pointer (p2) marks the location at which the write operation was continued after the end address (xst).

11. Arrangement (1) according to Claim 9 or 10, **characterized in that** the change pointers (p1) additionally also comprise information about the number (n1, n2) of bytes which have been stored in the ring memory (RNG') starting from the indicated location since the last alignment.

12. Arrangement (1) according to one of the preceding claims, **characterized in that** single instances of the logic functional module (FM) effect read or write access operations on the map (VI) and in this context are coordinated by means of a central status variable (CDS).

13. Arrangement (1) according to one of the preceding claims, **characterized in that** single instances of the logic functional modules (FM) effect write access operations on memory areas of the map (VI) and in this context are coordinated by means of a central status variable, the functional modules (FM) regularly requesting the status variable (CDS) and, when the status variable (CDS) has a particular value which is associated with the respective requesting functional module (FM), initiating queuing write operations.

14. Arrangement (1) according to the preceding claim, **characterized in that** the logic functional modules (FM) which effect the write access operations on a memory area of the map (VI) change the status variable (CDS) following the conclusion of the queuing write access operations.

15. Arrangement (1) according to the preceding claim, **characterized in that** the logic functional modules (FM) comprise a map status module (CDSA) which regularly retrieves the status variable (CDS) and allocates it a new value if another functional module (FM) has previously changed the value, which new value is associated with a particular functional module (FM) for the purpose of allocating the write access.

16. Arrangement (1) according to one of the preceding claims, **characterized in that** the arrangement (1) comprises an electrical power supply (U) and is in a form such that, when the latter has failed, any other access to the data store (13, 14) is first of all preceded by identification data from the data store (13, 14) being compared with those from the virtual map of the data store (13, 14).

17. Arrangement (1) according to the preceding claim, **characterized in that** it is in a form such that, in the event of a power failure, directly before entering a read or write operation from or to the data store (13, 14), when the power has returned, it first of all compares identification data from the data store (13, 14) with those from the virtual map of the data store (13, 14) and then starts the read or write operation.

18. Arrangement (1) according to the preceding claim, **characterized in that** in the event of a power failure during a read operation from the data store (13, 14) the functional modules (FM) remain in the present state until the power returns and then continue the read operation from this state after identification data from the data store (13, 14) have first of all been compared with those from the virtual map (VI) of the data store (13, 14).

19. Arrangement (1) according to one of the preceding claims, **characterized in that** in the event of a power failure directly following the conclusion of a read or write operation from or to the data store (13, 14), when the power has returned, identification data from the data store (13, 14) are first of all compared with those from the virtual map of the data store (13, 14).

20. Method for operating an arrangement (1) according to one of the preceding claims.

## Revendications

1. Dispositif (1) comportant un tachygraphe (DTCO) et une mémoire d'informations (13, 14), notamment une mémoire d'informations (13, 14) de carte à puce (4, 5), où le tachygraphe (DTCO) a une interface qui sert au transfert d'informations entre le tachygraphe (DTCO) et la mémoire d'informations (13, 14), où ledit tachygraphe (DTCO) comporte des modules fonctionnels logiques (FM) et au moins une mémoire (DMEM) et où les modules fonctionnels logiques (FM) sont configurés de manière telle que, au début de la transmission des données, une reproduction virtuelle (VI) de la mémoire d'informations (13, 14) est d'abord générée dans la mémoire (DMEM) du tachygraphe (DTCO), que les accès des modules fonctionnels logiques (FM) en écriture et en lecture qui se produisent ensuite sont d'abord effectués sur la reproduction virtuelle (VI) dans la mémoire (DMEM) et qu'une opération d'écriture est exécutée régulièrement en accédant à la mémoire d'informations (13, 14) de la carte à puce (4, 5), opération d'écriture pendant laquelle les différences entre la reproduction virtuelle (VI) et la mémoire d'informations (13, 14) sont corrigées, **caractérisé par le fait que** les modules fonctionnels logiques sont configurés de manière telle que l'accès régulier en écriture et en lecture a lieu d'une façon périodique à intervalles réguliers et/ou lorsque, en raison de modifications de la reproduction, un certain volume de données doit être ajusté entre la reproduction virtuelle (VI) et la mémoire d'informations (13, 14).

2. Dispositif (1) selon la revendication 1, **caractérisé par le fait que** l'accès à intervalles réguliers en écriture et en lecture a lieu toutes les 12 heures.

3. Dispositif (1) selon la revendication 1, **caractérisé par le fait qu'**il se produit, avant que la mémoire d'informations (13, 14) soit extraite du tachygraphe (DTCO), un ajustage entre la reproduction virtuelle (VI) et la mémoire d'informations (13, 14).

4. Dispositif (1) selon la revendication 1, **caractérisé par le fait que** la transmission de données entre la mémoire d'informations (13, 14) et le tachygraphe (DTCO) se fait sous forme cryptée.

5. Dispositif (1) selon la revendication 1, **caractérisé par le fait que** la mémoire d'informations (13, 14) a un tampon à mémoire circulaire (RNG).

6. Dispositif (1) selon la revendication 5, **caractérisé par le fait que** la reproduction (VI) de la mémoire circulaire (RNG') est conçue sous forme de mémoire linéaire (DMEM), avec une adresse de début (1st) pour la première inscription et une adresse de fin (xst) pour la dernière inscription, une succession d'adressages (ADRSEQ) définie d'une manière fixe prévoyant, après la requête de l'adresse de fin (xst), la requête de l'adresse de début (1st).

7. Dispositif (1) selon la revendication 1, **caractérisé par le fait que** la reproduction virtuelle (VI) de la mémoire d'informations (13, 14) reproduit l'architecture de la mémoire d'informations (13, 14) et que les données stockées dans la mémoire circulaire (RNG) ne sont représentées que partiellement dans la reproduction (VI).

8. Dispositif (1) selon l'une des revendications 5 - 7, **caractérisé par le fait que** la reproduction virtuelle (VI), après un commencement de production, ne reproduit d'abord que les données du dernier bloc d'informations de la mémoire circulaire (RNG) de la mémoire d'informations (13, 14).

9. Dispositif (1) selon l'une des revendications 5 - 7, **caractérisé par le fait que**, au moins, un indicateur de modifications (p1, p2) est affecté à la reproduction virtuelle (VI), à savoir que, dans la mémoire d'informations (13, 14) du tachygraphe (DTCO), est mémorisée la position de la reproduction virtuelle (VI) de la mémoire circulaire (RNG) à laquelle la première modification a eu lieu depuis le dernier ajustage.

10. Dispositif (1) selon la revendication 9, **caractérisé par le fait que**, dans le cas d'une opération d'écriture s'étendant de l'adresse de fin (xst) jusqu'à l'adresse de début (1st) de la reproduction (VI), au moins un premier indicateur de modification (p1) marque, dans la reproduction virtuelle (VI), la position précédant l'adresse de fin (xst) à partir de laquelle les modifications ont commencé après le dernier ajustage et au moins un deuxième indicateur de modification (p2) marque la position à laquelle l'opération d'écriture s'est poursuivie après l'adresse de fin (xst).

11. Dispositif (1) selon la revendication 9 ou 10, **caractérisé par le fait que** les indicateurs de modification (p1) comprennent, en supplément, aussi des informations relatives au nombre (n1, n2) d'octets qui ont été mémorisés, depuis le dernier ajustage, dans la mémoire circulaire (RNG') en commençant par la position indiquée.

12. Dispositif (1) selon l'une des revendications précédentes, **caractérisé par le fait que** certains modules fonctionnels logiques (FM) procèdent à des accès en écriture ou en lecture sur la reproduction (VI) et sont, dans ce contexte, coordonnés au moyen d'une variable centrale du statut (CDS).

13. Dispositif (1) selon l'une des revendications précédentes, **caractérisé par le fait que** certains modules fonctionnels logiques (FM) procèdent à des accès en écriture sur des zones de mémoire de la reproduction (VI) et sont, dans ce contexte, coordonnés au moyen d'une variable centrale du statut (CDS), les modules fonctionnels (FM) interrogeant régulièrement la variable du statut (CDS) et, lorsque la variable du statut (CDS) atteint une valeur déterminée qui est affectée à chacun des modules fonctionnels (FM) qui procèdent à l'interrogation, déclenchant les opérations d'écriture qui sont en attente.

14. Dispositif (1) selon la revendication précédente, **caractérisé par le fait que** les modules fonctionnels logiques (FM) qui procèdent aux accès en écriture sur une zone de mémoire de la reproduction (VI), modifient la variable du statut (CDS) une fois que les accès en écriture en attente ont été exécutés.

15. Dispositif (1) selon la revendication précédente, **caractérisé par le fait que** les modules fonctionnels logiques (FM) renferment un module de statut de la reproduction (CDSA) qui fait, à intervalles réguliers, appel à la variable du statut (CDS) et lui attribue une nouvelle valeur lorsqu'un autre module fonctionnel (FM) a modifié la valeur, cette nouvelle valeur étant affectée à un module fonctionnel (FM) déterminé pour l'attribution de l'accès en écriture.

16. Dispositif (1) selon l'une des revendications précédentes, **caractérisé par le fait que** le dispositif (1) comprend une alimentation en tension électrique et est conçu de manière telle que, après une défaillance de l'alimentation et avant tout autre accès à la mémoire d'informations (13, 14), d'abord des données d'identification de la mémoire d'informations (13, 14) sont comparées à celles de la reproduction virtuelle de la mémoire d'informations (13, 14).

17. Dispositif (1) selon la revendication précédente, **caractérisé par le fait qu'**il est conçu de manière telle que, dans le cas d'une chute de tension juste avant le début d'une opération de lecture ou d'écriture dans ou sur la mémoire d'informations (13, 14), après le retour de la tension, d'abord des données d'identification de la mémoire d'informations (13, 14) sont comparées à celles de la reproduction virtuelle de la mémoire d'informations (13, 14) et, ensuite, l'opération de lecture ou, respectivement, d'écriture est initiée.

18. Dispositif (1) selon la revendication précédente, **caractérisé par le fait que**, dans le cas d'une chute de tension pendant une opération de lecture sur la mémoire d'informations (13, 14), les modules fonctionnels (FM) restent dans leur état actuel jusqu'au retour de la tension et, ensuite, à partir de cet état, poursuivent l'opération de lecture après que, d'abord, des données d'identification de la mémoire d'informations (13, 14) ont été comparées à celles de la reproduction virtuelle (VI) de la mémoire d'informations (13, 14).

19. Dispositif (1) selon l'une des revendications précédentes, **caractérisé par le fait que**, dans le cas d'une chute de tension immédiatement après la fin d'une opération de lecture ou d'écriture dans ou sur la mémoire d'informations (13, 14), après le retour de la tension, d'abord des données d'identification de la mémoire d'informations (13, 14) sont comparées à celles de la reproduction virtuelle de la mémoire d'informations (13, 14).

20. Procédé permettant de faire fonctionner un dispositif (1) conforme à l'une des revendications précédentes.
